# FASCICULE DE BREVET EUROPEEN

(11) **EP 2 201 870 B1**
(45) Date de publication et mention de la délivrance du brevet: **15.05.2013**
(21) Numéro de dépôt: 09306233.9
(22) Date de dépôt: 15.12.2009
(51) Int. Cl.: A47J 27/08

(54) **Appareil de cuisson d'aliments sous pression à mâchoires allégées et procédé de fabrication**
Druckkochgerät zum Zubereiten von Nahrungsmitteln mit Verschlussklammern mit vermindertem Gewicht und Herstellungsverfahren
Pressure-cooking device with lightened jaws and manufacturing method

(30) Priorité: 30.12.2008 FR 0859132
(43) Date de publication de la demande: 30.06.2010
(73) Titulaire: SEB S.A., 69130 Ecully (FR)
(72) Inventeur: Cartigny, Michel, Pierre, 21310, MIREBEAU (FR); Thion, Frédéric, 21121, AHUY (FR)
(74) Mandataire: Martin, Didier Roland Valéry

(56) Documents cités:
- EP-A- 0 611 540
- EP-A- 1 321 080

## Description

La présente invention se rapporte au domaine technique général des appareils de cuisson d'aliments sous pression dans une atmosphère chargée en vapeur, et par exemple aux appareils dénommés cuiseurs-vapeur ou autocuiseurs comportant une cuve et un couvercle. L'invention se rapporte plus particulièrement aux mâchoires de verrouillage et à leur procédé de fabrication, lesquelles mâchoires sont destinées à assurer le verrouillage du couvercle sur la cuve des appareils de cuisson considérés.

La présente invention concerne un appareil de cuisson d'aliments sous pression avec une cuve et un couvercle et avec au moins une mâchoire de verrouillage destinée à venir verrouiller/déverrouiller le couvercle sur la cuve, ladite au moins une mâchoire comportant :
- au moins deux ailes de verrouillage ayant une section en U, une face supérieure de portée sur le couvercle, une face frontale et une face inférieure repliée destinée à venir en contact avec et sous le bord de cuve,
- une section centrale reliant lesdites au moins deux ailes de verrouillage et présentant une face supérieure de portée centrale et un dégagement, ladite section centrale étant dépourvue de face inférieure repliée.

La présente invention concerne également un procédé de fabrication d'une mâchoire de verrouillage avec une section transversale en U pour un appareil de cuisson d'aliments sous pression avec une cuve et un couvercle, ledit procédé consistant à obtenir la mâchoire par pliage d'une pièce métallique sensiblement plane ayant une configuration et des dimensions préétablies correspondant à la configuration et aux dimensions finales de la mâchoire définitive après le pliage, ladite pièce présentant selon une direction longitudinale, une dimension longitudinale correspondant à celle de la mâchoire définitive et selon une direction transversale, une dimension transversale hors tout correspondant à la section en U finale de la mâchoire.

Il est déjà connu d'avoir recours à des mâchoires de verrouillage pour assurer le verrouillage/déverrouillage des appareils de cuisson d'aliments sous pression. Ces mâchoires sont généralement montées sur le couvercle avec une possibilité de déplacement radial par l'intermédiaire d'un dispositif de commande de manière à pouvoir déplacer les mâchoires pour qu'elles viennent alternativement, verrouiller ou déverrouiller le couvercle sur la cuve de l'appareil.

Les mâchoires de verrouillage sont généralement au moins au nombre de deux et montées sur le couvercle de l'appareil en position diamétralement opposée. Elles ont des dimensions et une extension périphérique qui varient, en particulier selon la taille des autocuiseurs et selon les efforts auxquelles elles sont soumises en cours de fonctionnement de l'appareil.

De tels dispositifs sont par exemple décrits dans les demandes de brevet EP-0 691 096 et EP-0 691 097 au nom du même demandeur.

Les dispositifs connus donnent généralement satisfaction et s'avèrent être d'une manipulation aisée, en particulier pour l'atteinte des positions de verrouillage et de déverrouillage.

Les mâchoires utilisées présentent une section transversale sensiblement en U qui s'étend sur toute leur longueur périphérique de prise avec le couvercle. Elles possèdent une face supérieure de portée sur le couvercle et une face inférieure repliée destinée à venir en contact et sous les bords de la cuve de l'appareil afin de réaliser un verrouillage particulièrement sûr du couvercle sur la cuve. Les mâchoires de verrouillage de ce type s'étendent également généralement sur un secteur relativement important de la circonférence de l'appareil de cuisson de telle sorte que le couvercle est fermement et uniformément maintenu sur une portion importante de sa périphérie ce qui renforce la sécurité du verrouillage. Enfin, les mâchoires de verrouillage de ce type sont également d'une bonne robustesse en raison notamment des quantité et épaisseur du métal mises en jeux.

On a néanmoins cherché à améliorer les mâchoires de verrouillage de ce type, notamment pour essayer d'améliorer leur fabrication qui soulevait certaines difficultés en raison des nombreuses étapes de reprises industrielles nécessaires à l'issue du procédé de fabrication, lequel met en oeuvre une étape d'emboutissage.

Les opérations d'emboutissage créant des zones d'épaississement du matériau métallique, ainsi que des zones à aspect esthétique détérioré (rayures, chocs, zones martelées, etc), il était nécessaire, pour respecter un bon aspect visuel des mâchoires, d'effectuer de nombreuses reprises industrielles particulièrement longues et onéreuses telles que des étapes de finissage manuel, par exemple par polissage.

Par ailleurs, il s'est avéré que l'avantage lié à la robustesse de ces mâchoires s'accompagnait néanmoins d'inconvénients liés à leur poids et à leur coût résultant de l'utilisation de quantités de matière importantes en vue d'obtenir des mâchoires d'épaisseur et de dimensionnement conséquents. Le coût unitaire de telles mâchoires devait donc être amélioré.

C'est la raison pour laquelle il a déjà été proposé, sans pour autant réduire la robustesse, la fiabilité et la sécurité des mâchoires de verrouillage de ce type, de réduire leur poids et de réduire leur coût de fabrication en réduisant la quantité de matière utilisée et en simplifiant leur procédé de fabrication.

Une telle amélioration est décrite dans le brevet EP-1 321 080 du même demandeur, laquelle amélioration a consisté à réaliser une mâchoire allégée présentant d'une part deux ailes de verrouillage avec une section transversale en U et d'autre part une zone centrale de la mâchoire pourvue d'un dégagement de matière.

Une telle mâchoire s'est avérée particulièrement économique à produire en raison d'une part de la quantité réduite de matière utilisée puisque la zone centrale de la mâchoire présente une zone dépourvue de matière (le dégagement), et d'autre part en raison de la possibilité de réaliser une telle mâchoire par pliage et non plus par emboutissage. Ainsi, non seulement la quantité de matière utilisée a pu être réduite sans pour autant obérer la qualité de résistance de telles mâchoires, mais encore les opérations de finissage ont pu être réduites voire supprimées en raison du recours à une opération de pliage particulièrement respectueuse de l'intégrité et de l'aspect extérieur des pièces. Le coût final unitaire de telles mâchoires a donc pu être réduit sans obérer la résistance de ces mâchoires.

Il s'est néanmoins avéré que de telles mâchoires pouvaient encore être améliorées et que la réalisation du dégagement dans la zone centrale d'une mâchoire, du type de celles décrites dans le brevet EP-1 321 080, était source une série de contrôles stricts et contraignants lors du procédé de fabrication par pliage. De tels contrôles sont nécessaires pour garantir une rigidité et un maintien parfait de la mâchoire produite et respecter un ensemble de cotes précis sur la mâchoire. La réalisation d'un dégagement central sur la mâchoire rend en effet l'opération de pliage complexe à réaliser en raison de la répartition hétérogène des masses de métal à plier sur la pièce. L'optimisation du procédé de fabrication s'est donc avérée nécessaire, de même que la recherche d'une géométrie de mâchoires allégées optimisée pour améliorer le procédé de fabrication des mâchoires ainsi que leur résistance mécanique, leur esthétisme et la sécurité qu'elles procurent.

Les objets assignés à l'invention visent par conséquent à remédier aux différents inconvénients énumérés précédemment et à proposer un nouvel appareil de cuisson d'aliments sous pression équipé de mâchoires de verrouillage à géométrie allégée mais robustes, d'encombrement minimum et qui puissent être fabriquées de manière particulièrement simple et économique.

Un autre objet de l'invention vise à proposer un nouvel appareil de cuisson d'aliments sous pression équipé de mâchoires de verrouillage qui tout en présentant une bonne robustesse et une bonne rigidité sont d'un aspect visuel agréable et présentent des contours aussi lisses que possible.

Un autre objet de l'invention vise à proposer un nouvel appareil de cuisson d'aliments sous pression équipé de mâchoires de verrouillage dont le comportement lors de la montée en pression est parfaitement maîtrisé.

Un autre objet de l'invention vise à proposer un nouvel appareil de cuisson d'aliments sous pression équipé de mâchoires de verrouillage dont le montage est simplifié.

Les objets assignés à l'invention sont atteints à l'aide d'un appareil de cuisson d'aliments sous pression avec une cuve et un couvercle et avec au moins une mâchoire de verrouillage destinée à venir verrouiller/déverrouiller le couvercle sur la cuve, ladite au moins une mâchoire comportant :
- au moins deux ailes de verrouillage ayant une section en U, une face supérieure de portée sur le couvercle, une face frontale et une face inférieure repliée destinée à venir en contact avec et sous le bord de cuve,
- une section centrale reliant lesdites au moins deux ailes de verrouillage et présentant une face supérieure de portée centrale et un dégagement, ladite section centrale étant dépourvue de face inférieure repliée, ledit appareil étant **caractérisé en ce que** le dégagement est surmonté d'une face centrale de front qui s'étend en continu avec les faces frontales des deux ailes de verrouillage.

Les objets assignés à l'invention sont également atteints à l'aide d'un procédé de fabrication d'une mâchoire de verrouillage avec une section transversale en U pour un appareil de cuisson d'aliments sous pression avec une cuve et un couvercle, ledit procédé consistant à obtenir la mâchoire par pliage d'une pièce métallique sensiblement plane ayant une configuration et des dimensions préétablies correspondant à la configuration et aux dimensions finales de la mâchoire définitive après le pliage, ladite pièce présentant selon une direction longitudinale, une dimension longitudinale correspondant à celle de la mâchoire définitive et selon une direction transversale, une dimension transversale hors tout correspondant à la section en U finale de la mâchoire **caractérisé en ce que** :
- on utilise une pièce métallique comportant un dégagement central s'étendant selon la direction longitudinale pour définir à l'aplomb du dégagement central une zone centrale ayant une dimension transversale inférieure à la dimension transversale hors tout et de part et d'autre dudit dégagement central, deux portions d'extrémités de la pièce ayant une dimension transversale égale à la dimension transversale hors tout,
- on réalise un premier pliage longitudinal de la pièce selon sa direction longitudinale et selon une ligne de pliage passant au dessus dudit dégagement central pour obtenir une pièce pliée en L définissant une face supérieure de portée de la mâchoire et une face frontale de la mâchoire s'étendant sur toute la dimension longitudinale de la mâchoire.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- Les figures 1 à 3 illustrent, selon des vues en perspective, les principales étapes du procédé de fabrication d'une mâchoire de verrouillage conforme à l'invention conduisant, par pliage, à une mâchoire de verrouillage en U conforme à l'invention (figure 3).
- La figure 4 illustre, selon une vue partiellement écorchée, un appareil de cuisson d'aliments sous pression avec une mâchoire de verrouillage conforme à l'invention en position de verrouillage.
- La figure 5 illustre, selon une vue en coupe transversale correspondant à un agrandissement d'un détail de réalisation de la mâchoire illustrée à la figure 4, la géométrie particulière de la section centrale de la mâchoire lorsque l'appareil de cuisson selon l'invention est verrouillé et à la pression atmosphérique.
- La figure 6 illustre selon une vue en perspective la face arrière d'une mâchoire de verrouillage destinée à équiper un appareil de cuisson d'aliments sous pression conforme à l'invention.
- La figure 7 illustre, selon une vue en perspective de dessus, une vue partielle du couvercle d'un appareil de cuisson d'aliments sous pression conforme à l'invention montrant le montage d'une mâchoire de verrouillage.
- La figure 8 illustre selon une vue en perspective agrandie, un détail de réalisation du couvercle destiné à recevoir une mâchoire de verrouillage conforme à l'invention.

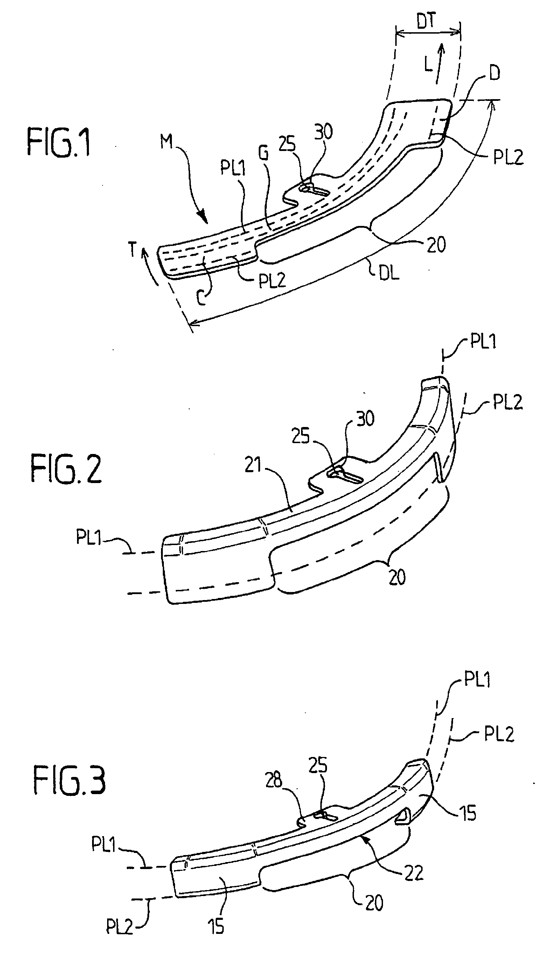

Les figures 1 à 8 illustrent un appareil de cuisson d'aliments sous pression conforme à l'invention, tel qu'un autocuiseur, en particulier du type à mâchoires, destiné à assurer la cuisson d'aliments sous pression de vapeur.

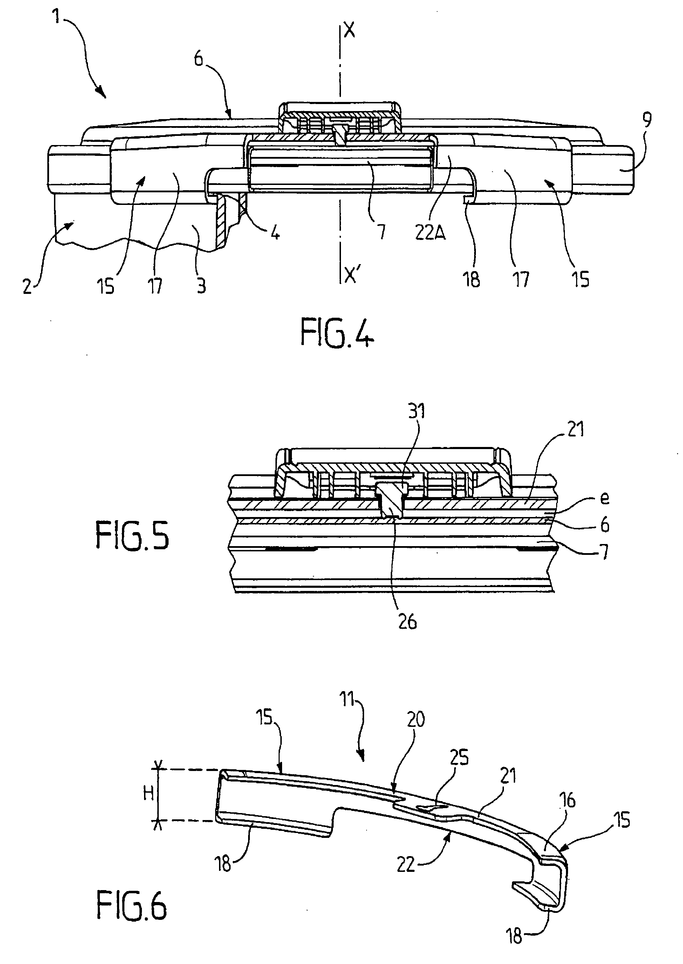

De manière connue, l'autocuiseur 1 (figures 4 à 8 par exemple) comprend une cuve métallique 2, par exemple de section circulaire ou ovale, avec un fond (non représenté aux figures) à partir duquel s'élèvent des parois 3 se terminant avantageusement par un bord roulé 4 en direction de l'extérieur de l'appareil.

L'autocuiseur 1 comporte également, tel qu'illustré aux figures, un couvercle 6 réalisé dans un matériau métallique, et destiné à être rapporté et positionné sur la cuve 2 de manière étanche, par l'intermédiaire d'un joint annulaire, en vue de créer une enceinte de cuisson hermétique au sein de laquelle on peut obtenir, par apport de chaleur externe, une pression de fonctionnement supérieure à la pression atmosphérique.

Tel qu'illustré en particulier à la figure 4, le joint annulaire 7 est réalisé en un matériau élastomère du type silicone et est maintenu en position stable dans le couvercle 6 au sein d'une gorge annulaire périphérique 9.

L'appareil conforme à l'invention est pourvu des dispositifs de sécurité à la surpression nécessaires et requis pour un fonctionnement en toute sécurité de l'appareil, ces dispositifs, du genre soupape et/ou valve de surpression et régulation, ou système d'extrusion du joint, n'étant pas représentés aux figures mais étant bien connu de l'homme du métier et commun à tous les appareils domestiques de ce type.

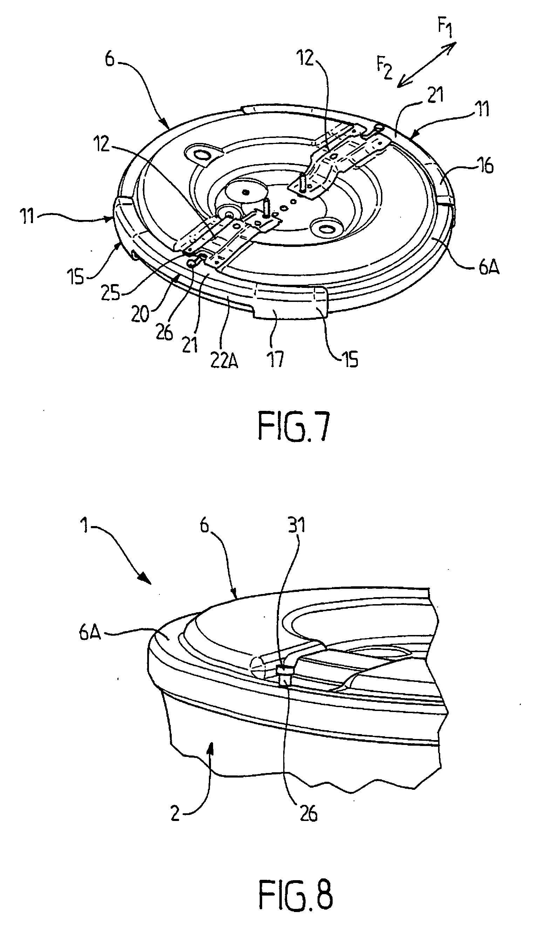

Dans l'exemple représenté aux différentes figures, l'appareil conforme à l'invention est pourvu de deux mâchoires de verrouillage 11 montées mobiles radialement et symétriquement sur le couvercle 6 en considération de l'axe de symétrie principal X-X' de l'autocuiseur. De manière connue, les mâchoires de verrouillage 11 sont reliées à des bras entraineurs 12, guidés en translation radiale par des moyens appropriés et reliés à un système de commande (non représenté) central susceptible d'être actionné par l'utilisateur, tel qu'un bouton ou une poignée de commande. La course des bras entraineurs 12 est telle que l'utilisateur par actionnement des organes de commande peut commander le déplacement radial des mâchoires 11 selon les directions radiales F1 ou F2 pour leur faire atteindre respectivement, leurs positions de déverrouillage ou de verrouillage (tel qu'illustré aux figures 4 et 7 par exemple) dans lesquelles la mâchoire 11 vient verrouiller/déverrouiller le couvercle 6 sur la cuve 2.

A titre de variante, et sans sortir du cadre de l'invention, l'appareil de cuisson d'aliments sous pression conforme à l'invention peut comporter un nombre supérieur de mâchoires 11 et par exemple trois ou quatre, voire ne comporter qu'une seule et unique mâchoire 11 sans pour autant sortir du cadre de l'invention. L'appareil selon l'invention comporte donc au moins une mâchoire de verrouillage.

A titre de variante supplémentaire (non illustrée), la ou les mâchoires peuvent être montées sur la cuve.

Les mâchoires de verrouillage 11 destinées à équiper un appareil de cuisson conforme à l'invention sont des mâchoires présentant une section transversale en U et plus particulièrement au moins deux ailes de verrouillage 15 ayant une section transversale en U définissant une face supérieure de portée 16 destinée à venir reposer sur la périphérie externe 6A du couvercle 6, une face frontale 17 par exemple sensiblement verticale, se poursuivant par une face inférieure repliée 18 destinée à venir en contact avec et sous le bord 4 de cuve.

Les mâchoires conformes à l'invention comportent également une section centrale 20 reliant ou faisant la jonction entre lesdites au moins deux ailes de verrouillage 15 et présentant une face supérieure de portée centrale 21 et un dégagement 22, ladite section centrale 20 étant dépourvue de face inférieure repliée.

Tel qu'illustré aux figures, en particulier aux figures 7 et 8, les mâchoires de verrouillage 11 sont courbes et forment un arc de cercle dont la courbure est adaptée et conjuguée à la courbure du couvercle 6 de la cuve 2.

A titre d'exemple non limitatif et dans le cas d'un appareil avec deux mâchoires ayant une cuve de diamètre intérieur de l'ordre de 253 mm, chaque mâchoire couvre un secteur angulaire compris entre 80° et 120° selon la géométrie du couvercle et les épaisseurs du métal en jeu. Avantageusement, selon l'exemple préférentiel de l'invention, le secteur angulaire couvert par chaque mâchoire est de l'ordre de 102°.

Tel que cela est bien connu de l'homme du métier, les mâchoires 11 s'étendent sur une longueur périphérique définie et propre à chaque autocuiseur en fonction de sa taille, et par exemple sur une longueur périphérique correspondant à un tiers, un quart ou un cinquième de sa circonférence, cette longueur étant également fonction des efforts subis lorsque la pression de fonctionnement est atteinte.

Selon une caractéristique importante de l'invention, le dégagement 22 dont la longueur périphérique définit la section centrale, est surmonté d'une face centrale 22A de front qui s'étend en continu avec les faces frontales 17 des deux ailes de verrouillage 15 selon la courbure générale de la mâchoire. On obtient ainsi une mâchoire dont la rigidité de la section centrale est renforcée et présente une section transversale en L dans la partie supérieure de ladite section centrale entre la face supérieure de portée centrale 21 et la face centrale 22A. En outre, ceci facilite la fabrication en permettant d'obtenir des côtes précises au moins dans la partie centrale de la mâchoire en raison précisément de la bonne résistance du métal dans cette zone.

De manière avantageuse, les faces supérieures de portée 16 et la face supérieure de portée centrale 21 sont sensiblement continues et planes afin de ménager un contact sensiblement constant et continu entre le couvercle et la mâchoire en position de verrouillage.

Selon une version avantageuse de l'invention, les faces supérieures de portée 16 et la face supérieure de portée centrale 21 sont conformées pour ménager un jeu **e** entre le couvercle 6 et la portée supérieure centrale 21 (figure 5) lorsque le couvercle 6 est verrouillé et la pression interne de l'appareil sensiblement égale à la pression atmosphérique. Dans cette situation, l'appareil est au repos et n'est pas en fonctionnement.

Le jeu **e** est par exemple obtenu en conférant une très légère inclinaison des faces de portée supérieures 16 de la mâchoire, lesquelles faces s'élèvent légèrement à partir des faces supérieures de portée 16 en direction de la face supérieure de portée centrale 21.

Une telle particularité permet de maîtriser très précisément le moment où, lorsque l'appareil monte en pression, la face supérieure externe du couvercle 6, en l'occurrence la périphérie externe 6A, vient en contact avec la face interne de la face supérieure de portée centrale 21, c'est-à-dire dans le secteur où le couvercle n'est pas retenu par les ailes de verrouillage 15.

On s'est en effet rendu compte que la maîtrise de la déformation dans ce secteur était importante pour le bon fonctionnement de l'appareil, mais ne pouvait être obtenue que si le jeu **e** pouvait être maintenu dans des côtes précises et ce de manière répétitive au cours du procédé de production industrielle. Il s'avère en effet que si le jeu e n'est pas maîtrisé et constant, et avantageusement n'est pas maintenu à un minimum de l'ordre de 1 mm, le contact entre le couvercle 6 et la mâchoire 11 intervient très rapidement dans le secteur non maintenu du couvercle 6 au niveau de la section centrale 20 lors de la montée en pression de l'appareil. Ainsi, si le contact intervient très et trop rapidement après le début de la montée en pression de l'appareil, le joint 7 a une tendance trop rapide au fluage ce qui provoque immédiatement une fuite d'air empêchant la montée en pression de l'appareil. Ce phénomène peut également être la cause d'une déformation trop importante et irréversible du couvercle à des valeurs de pression inférieures à celles définies par les normes de sécurité.

En revanche, il s'avère que si le jeu **e** est trop important, et avantageusement supérieur à une valeur définie et par exemple de l'ordre de 2 mm, le contact entre la mâchoire 11 et le couvercle 6 se produit trop tard pendant ou après la montée en pression de l'appareil car il faut alors atteindre une pression de fonctionnement et de test importante de l'ordre de 400 à 500 kPa pour obtenir enfin une déformation du joint 7 et une fuite à des fins de sécurité. Il doit d'ailleurs être noté que dans le cas où la déformation du couvercle 6 dans le secteur non retenu, ne serait pas suffisante ou trop faible, une telle situation peut conduire à un risque de séparation brutale du couvercle 6 par rapport à la cuve 2.

Il s'avère par conséquent que l'existence d'un jeu **e** est primordiale et qu'il est idéalement sensiblement compris entre 1 et 3 mm, et de préférence entre 1,5 et 2 mm, afin de conduire à un fonctionnement optimisé et sécuritaire de l'appareil de cuisson conforme à l'invention.

Avantageusement, le jeu e est sensiblement constant sur toute la longueur de la face supérieure de portée centrale 21.

De manière avantageuse, la hauteur du dégagement 22 est comprise entre 20 % et 70 % de H, la valeur H étant la hauteur de la face frontale 17 de la mâchoire 11. A titre d'exemple non limitatif, et pour un diamètre intérieur de cuve de l'ordre de 253 mm, la hauteur du dégagement 22 sera avantageusement de l'ordre de 12, 5 mm environ, tolérances comprises.

Avantageusement, la face supérieure de portée centrale 21 est pourvue d'une fente radiale 25 destinée à permettre le passage d'un axe 26 fixé à demeure sur le couvercle 6 pour assurer le guidage en translation, selon les flèches F1 ou F2 de la mâchoire 11 sur le couvercle 6.

En particulier, et tel que visible aux figures, la face supérieure de portée centrale 21 comporte, sensiblement dans sa portion centrale une extension radiale 28 dirigée vers le centre du couvercle 6, au sein de laquelle est ménagée la fente radiale 25. L'axe 26 est fixé à demeure et de manière inamovible par exemple par soudage ou tout moyen équivalent, tel que clipsage ou autre, par exemple sur la périphérie externe 6A du couvercle 6. Cette fixation inamovible est réalisée après l'étape de fabrication proprement dite du couvercle 6 et en tout cas avant le montage de la mâchoire 11 sur le couvercle 6.

De manière avantageuse, la fente radiale 25 comporte à son extrémité la plus proche du centre du couvercle, une portion terminale élargie 30, par exemple en forme de cercle, de diamètre supérieur à la largeur moyenne de la fente radiale 25, ladite portion terminale élargie 30 étant destinée à permettre le passage d'un épaulement 31 surmontant l'axe 26, lors du montage de la mâchoire 11 sur le couvercle 6.

Une telle disposition permet d'enfiler très facilement la mâchoire 11 sur l'axe 26 lors du montage en faisant passer l'épaulement 31 dans la portion terminale élargie 30. L'opérateur chargé du montage peut ensuite translater selon la direction F2 la mâchoire 11 en faisant coulisser la mâchoire 11 le long de l'axe 26 pour que la mâchoire 11 vienne occuper sa position fonctionnelle.

L'invention concerne également un procédé de fabrication d'une mâchoire de verrouillage avec une section transversale en U pour un appareil de cuisson d'aliments sous pression avec une cuve et un couvercle, ledit procédé consistant à obtenir la mâchoire par pliage d'une pièce métallique M (figure 1) sensiblement plane ayant une configuration et des dimensions préétablies correspondant à la configuration et aux dimensions finales de la mâchoire définitive après le pliage, ladite pièce M présentant selon une direction longitudinale L, une dimension longitudinale DL correspondant à celle de la mâchoire définitive et selon une direction transversale T, une dimension transversale DT hors tout correspondant à la section en U finale de la mâchoire.

Tel qu'illustré aux figures 1 à 3, la mâchoire de verrouillage selon l'invention étant préférentiellement destinée à équiper des appareils de cuisson ayant, de manière non limitative, une forme généralement circulaire, la mâchoire sera obtenue à partir d'une pièce métallique M plane ayant une courbure générale correspondant à la courbure finale de la mâchoire à obtenir. La plaque M sera donc de préférence courbe.

Tel qu'illustré aux figures, la pièce métallique M, issue par exemple d'une opération d'emboutissage ou de découpage, présente à l'issue de cette opération une configuration et des dimensions correspondant à celles de la mâchoire définitive et fonctionnelle. En particulier, elle présentera un dégagement central 22 surmontée d'une zone centrale G avec de part et d'autre deux portions d'extrémité C, D planes correspondant aux futures ailes de verrouillage 15, ainsi qu'une zone élargie 28, s'étendant radialement et située au droit et à l'opposé du dégagement 22.

La configuration et les dimensions de la pièce métallique M étant préétablies en vue de réaliser une mâchoire par pliage, il est possible de définir une direction ou extension longitudinale L sur la pièce, laquelle direction ou extension longitudinale correspond à la courbure générale de la pièce métallique M qui s'étend selon un arc de cercle, par exemple sensiblement centré sur la pièce métallique.

De la même façon, il est possible de définir une direction ou extension transversale T, sensiblement normale à la l'extension longitudinale L de manière à définir une direction ou extension transversale hors tout DT de la mâchoire correspondant à la longueur développée de la section en U finale de la mâchoire.

Le procédé selon l'invention vise donc à obtenir une mâchoire de verrouillage pour appareil de cuisson sous pression à partir d'une pièce métallique sensiblement plane, présentant une courbure générale avec deux portions d'extrémités C, D se joignant par la zone centrale G formant donc une portion rétrécie de la pièce.

Selon une étape importante du procédé conforme à l'invention :
- on utilise ainsi une pièce métallique M comportant un dégagement central 22 s'étendant selon l'extension longitudinale L pour définir à l'aplomb du dégagement central 22 une zone centrale G de dimension transversale inférieure à la dimension transversale DT et, de part et d'autre dudit dégagement central 22, deux portions d'extrémités C, D ayant une dimension transversale égale à la dimension transversale de la pièce DT, et
- on réalise un premier pliage longitudinal de la pièce M selon son extension longitudinale L et selon une ligne de pliage PL1 passant sur ledit dégagement central 22, c'est à dire dans la zone centrale G pour obtenir une pièce pliée en L définissant une face supérieure de portée de la mâchoire et une face frontale de la mâchoire s'étendant sur toute la longueur de la mâchoire.

Selon l'invention, on réalise également un second pliage longitudinal de la pièce M selon une ligne de pliage PL2 passant sur les deux portions d'extrémités C, D et sur le dégagement central 22 pour plier les deux portions d'extrémités et obtenir deux ailes de verrouillage 15 avec une section en U.

De manière avantageuse, le premier et le second pliage selon l'invention sont réalisés de manière subséquente ou, à titre alternatif, de manière concomitante.

De manière préférentielle, on réalise le premier pliage avant de réaliser le second pliage.

L'opération de pliage d'une pièce métallique plane M dont la géométrie est illustrée à la figure 1 et selon les lignes de pliage identifiées permet d'obtenir des mâchoires de verrouillage dont les cotes sont parfaitement précises et obtenues de manière répétitive avec une bonne précision, malgré les risques de variation de cotes susceptibles de survenir lors du pliage proprement dit. Le pliage de la pièce le long de la première ligne de pliage s'effectuant sur une zone de matière ininterrompue contribue à réaliser un pliage régulier permettant de maintenir les cotes de la pièce finale.

## Revendications

1. Appareil (1) de cuisson d'aliments sous pression avec une cuve (2) et un couvercle (6) et avec au moins une mâchoire de verrouillage (11) destinée à venir verrouiller/déverrouiller le couvercle (6) sur la cuve (2), ladite au moins une mâchoire (11) comportant :
- au moins deux ailes de verrouillage (15) ayant une section en U, une face supérieure de portée (16) sur le couvercle (6), une face frontale (17) et une face inférieure repliée (18) destinée à venir en contact avec et sous le bord (4) de cuve,
- une section centrale (20) reliant lesdites au moins deux ailes de verrouillage (15) et présentant une face supérieure de portée centrale (21) et un dégagement (22), ladite section centrale (20) étant dépourvue de face inférieure repliée (18), ledit appareil (1) étant **caractérisé en ce que** le dégagement (22) est surmonté d'une face centrale (22A) de front qui s'étend en continu avec les faces frontales (17) des deux ailes de verrouillage (15).

2. Appareil (1) de cuisson d'aliments sous pression selon la revendication 1 **caractérisé en ce que** les faces supérieures de portée (16) et la face supérieure de portée centrale (21) sont sensiblement continues et planes.

3. Appareil (1) de cuisson d'aliments sous pression selon la revendication 2 **caractérisé en ce que** les faces supérieures de portée (16) et la face supérieure de portée centrale (21) sont conformées pour ménager un jeu **e** entre le couvercle (6) et la face supérieure de portée centrale (21) lorsque le couvercle (6) est verrouillé et la pression interne de l'appareil (1) sensiblement égale à la pression atmosphérique.

4. Appareil (1) de cuisson d'aliments sous pression selon la revendication 3 **caractérisé en ce que** le jeu **e** est sensiblement compris entre 1 et 3 mm, et de préférence entre 1,5 et 2 mm.

5. Appareil (1) de cuisson d'aliments sous pression selon la revendication 4 **caractérisé en ce que** le jeu **e** est sensiblement constant sur toute la longueur de la face supérieure de portée centrale (21).

6. Appareil (1) de cuisson d'aliments sous pression selon l'une des revendications 1 à 5 **caractérisé en ce que** la hauteur du dégagement (22) est comprise entre 20 % et 70 % de H, la valeur H étant la hauteur de la face frontale (17) de la mâchoire (11).

7. Appareil (1) de cuisson d'aliments sous pression selon l'une des revendications 1 à 6 **caractérisé en ce que** la face supérieure de portée (16) est pourvue d'une fente radiale (25) destinée à permettre le passage d'un axe (26) fixé à demeure sur le couvercle (6) pour assurer le guidage en translation de la mâchoire (11).

8. Appareil (1) de cuisson d'aliments sous pression selon la revendication 7 **caractérisé en ce que** la fente radiale (25) comporte une portion terminale élargie (30) destinée à permettre le passage d'un épaulement (31) surmontant l'axe (26), lors du montage de la mâchoire (11) sur le couvercle (6).

9. Procédé de fabrication d'une mâchoire de verrouillage (11) avec une section transversale en U pour un appareil (1) de cuisson d'aliments sous pression avec une cuve (2) et un couvercle (6), ledit procédé consistant à obtenir la mâchoire (11) par pliage d'une pièce métallique (M) sensiblement plane ayant une configuration et des dimensions préétablies correspondant à la configuration et aux dimensions finales de la mâchoire (11) définitive après le pliage, ladite pièce présentant selon une direction longitudinale (L), une dimension longitudinale correspondant à celle de la mâchoire (11) définitive et selon une direction transversale (T), une dimension transversale hors tout correspondant à la section en U finale de la mâchoire (11) **caractérisé en ce que** :
- on utilise une pièce métallique (M) comportant un dégagement central (22) s'étendant selon la direction longitudinale (L) pour définir à l'aplomb du dégagement central (22) une zone centrale (G) ayant une dimension transversale inférieure à la dimension transversale hors tout et de part et d'autre dudit dégagement central (22), deux portions d'extrémités (C, D) de la pièce (M) ayant une dimension transversale égale à la dimension transversale hors tout,
- on réalise un premier pliage longitudinal de la pièce (M) selon sa direction longitudinale (L) et selon une ligne de pliage (PL1) passant au dessus dudit dégagement central (22) pour obtenir une pièce pliée en L définissant une face supérieure de portée (21) de la mâchoire (11) et une face frontale (17) de la mâchoire (11) s'étendant sur toute la dimension longitudinale de la mâchoire (11).

10. Procédé de fabrication selon la revendication 9 **caractérisé en ce qu'**on réalise un second pliage longitudinal de la pièce (M) selon une ligne de pliage (PL2) passant sur les deux portions d'extrémités (C, D) et sur le dégagement central (22) pour plier les deux portions d'extrémités (C, D) et obtenir deux ailes de verrouillage (15) avec une section en U.

11. Procédé de fabrication selon la revendication 10 **caractérisé en ce qu'**on réalise le premier et le second pliage (PL1, PL2) de manière subséquente.

12. Procédé de fabrication selon la revendication 11 **caractérisé en ce qu'**on réalise le premier pliage (PL1) avant le second pliage (PL2).

## Patentansprüche

1. Gerät (1) zum Garen von Nahrungsmitteln unter Druck mit einem Behälter (2) und einem Deckel (6) und mit mindestens einer Verriegelungsklammer (11), die dazu bestimmt ist, den Deckel (6) auf dem Behälter (2) zu verriegeln/entriegeln, wobei die mindestens eine Klammer (11) folgendes umfasst:
- mindestens zwei Verriegelungsteile (15) mit einem U-förmigen Querschnitt, einer oberen Tragfläche (16) auf dem Deckel (6), einer Vorderseite (17) und einer gefalzten Unterseite (18), die dazu bestimmt ist, mit und unter dem Rand (4) des Behälters in Kontakt zu kommen,
- einen zentralen Abschnitt (20), der die mindestens zwei Verriegelungsteile (15) verbindet und eine zentrale obere Tragfläche (21) und eine Aussparung (22) aufweist, wobei der zentrale Abschnitt (20) ohne gefalzte Unterseite (18) ausgebildet ist, wobei das Gerät (1) **dadurch gekennzeichnet ist, dass** über der Aussparung (22) eine zentrale Vorderseite (22A) vorgesehen ist, die sich kontinuierlich mit den Vorderseiten (17) der zwei Verriegelungsteile (15) erstreckt.

2. Gerät (1) zum Garen von Nahrungsmitteln unter Druck nach Anspruch 1, **dadurch gekennzeichnet, dass** die oberen Tragflächen (16) und die zentrale obere Tragfläche (21) im Wesentlichen kontinuierlich und eben sind.

3. Gerät (1) zum Garen von Nahrungsmitteln unter Druck nach Anspruch 2, **dadurch gekennzeichnet, dass** die oberen Tragflächen (16) und die zentrale obere Tragfläche (21) derart ausgeführt sind, dass ein Spiel e zwischen dem Deckel (6) und der zentralen oberen Tragfläche (21) entsteht, wenn der Deckel (6) verschlossen ist und der Innendruck des Geräts (1) im Wesentlichen gleich dem Luftdruck ist.

4. Gerät (1) zum Garen von Nahrungsmitteln unter Druck nach Anspruch 3, **dadurch gekennzeichnet, dass** das Spiel e im Wesentlichen zwischen 1 und 3 mm und vorzugsweise zwischen 1,5 und 2 mm beträgt.

5. Gerät (1) zum Garen von Nahrungsmitteln unter Druck nach Anspruch 4, **dadurch gekennzeichnet, dass** das Spiel e im Wesentlichen über die gesamte Länge der zentralen oberen Tragfläche (21) konstant ist.

6. Gerät (1) zum Garen von Nahrungsmitteln unter Druck nach einem der Ansprüche 1 bis 5, **dadurch gekennzeichnet, dass** die Höhe der Aussparung (22) zwischen 20 % und 70 % von H beträgt, wobei der Wert H die Höhe der Vorderseite (17) der Klammer (11) ist.

7. Gerät (1) zum Garen von Nahrungsmitteln unter Druck nach einem der Ansprüche 1 bis 6, **dadurch gekennzeichnet, dass** die obere Tragfläche (16) mit einem radialen Schlitz (25) versehen ist, der dazu bestimmt ist, den Durchgang einer Achse (26) zu ermöglichen, die fest auf dem Deckel (6) montiert ist, um die Translationsführung der Klammer (11) zu gewährleisten.

8. Gerät (1) zum Garen von Nahrungsmitteln unter Druck nach Anspruch 7, **dadurch gekennzeichnet, dass** der radiale Schlitz (25) einen erweiterten Endabschnitt (30) umfasst, der dazu bestimmt ist, den Durchgang eines Absatzes (31), der über der Achse (26) montiert ist, bei der Montage der Klammer (11) auf dem Deckel (6) zu ermöglichen.

9. Verfahren zur Herstellung einer Verriegelungsklammer (11) mit einem U-förmigen Querschnitt für ein Gerät (1) zum Garen von Nahrungsmitteln unter Druck mit einem Behälter (2) und einem Deckel (6), wobei das Verfahren darin besteht, die Klammer (11) durch Falzen eines im Wesentlichen ebenen metallischen Stücks (M) herzustellen, welches eine vorher festgelegte Ausführung und Abmessung hat, die der endgültigen Ausführung und Abmessung der endgültigen Verriegelungsklammer (11) nach dem Falzen entsprechen, wobei das Stück entlang einer Längsrichtung (L) eine Längsabmessung aufweist, die jener der endgültigen Klammer (11) entspricht, und in einer Querrichtung (T) eine Gesamtquerabmessung aufweist, die dem endgültigen U-förmigen Querschnitt der Klammer (11) entspricht, **dadurch gekennzeichnet, dass**:
- ein metallisches Stück (M) verwendet wird, umfassend eine zentrale Aussparung (22), die sich in Längsrichtung (L) erstreckt, um senkrecht zur zentralen Aussparung (22) eine zentrale Zone (G) mit einer kleineren Querabmessung als die Gesamtquerabmessung beidseitig der zentralen Aussparung (22) zu definieren, wobei zwei Endabschnitte (C, D) des Stücks (M) eine Querabmessung gleich der Gesamtquerabmessung aufweisen,
- ein erstes Längsfalzen des Stücks (M) in seine Längsrichtung (L) und entlang einer Falzlinie (PL1), die über der zentralen Aussparung (22) verläuft, erfolgt, um ein L-förmig gefalztes Stück zu erhalten, das eine obere Tragfläche (21) der Klammer (11) und eine Vorderseite (17) der Klammer (11) definiert, die sich über die gesamte Längsabmessung der Klammer (11) erstreckt.

10. Herstellungsverfahren nach Anspruch 9, **dadurch gekennzeichnet, dass** ein zweites Längsfalzen des Stücks (M) entlang einer Falzlinie (PL2), die auf den beiden Endabschnitten (C, D) und auf der zentralen Aussparung (22) verläuft, erfolgt, um die beiden Endabschnitte (C, D) zu falzen und zwei Verriegelungsteile (15) mit einem U-förmigen Querschnitt zu erhalten.

11. Herstellungsverfahren nach Anspruch 10, **dadurch gekennzeichnet, dass** das erste und das zweite Falzen (PL1, PL2) hintereinander durchgeführt werden.

12. Herstellungsverfahren nach Anspruch 11, **dadurch gekennzeichnet, dass** das erste Falzen (PL1) vor dem zweiten Falzen (PL2) erfolgt.

## Claims

1. A utensil (1) for cooking food under pressure, the utensil having a vessel (2), a lid (6), and at least one locking jaw (11) for locking/unlocking the lid (6) on the vessel (2), said at least one jaw (11) comprising:
at least two locking wings (15) of U-shaped section, a top bearing face (16) for bearing on the lid (6), a front face (17), and a folded bottom face (18) for coming into contact with the underside of the rim (4) of the vessel; and
a central section (20) interconnecting said at least two locking wings (15) and presenting a central top bearing face (21) and a gap (22), said central section (20) not having a folded bottom face (18),
said utensil (1) being **characterized in that** the gap (22) is surmounted by a central front face (22A) extending continuously with the front faces (17) of the two locking wings (15).

2. A utensil (1) for cooking food under pressure according to claim 1, **characterized in that** the top bearing faces (16) and the central top bearing face (21) are substantially continuous and plane.

3. A utensil (1) for cooking food under pressure according to claim 2, **characterized in that** the top bearing faces (16) and the central top bearing face (21) are shaped so as to leave clearance e between the lid (6) and the central top bearing face (21) when the lid (6) is locked and the pressure inside the utensil (1) is substantially equal to atmospheric pressure.

4. A utensil (1) for cooking food under pressure according to claim 3, **characterized in that** the clearance e lies substantially in the range 1 mm to 3 mm, and preferably in the range 1.5 mm to 2 mm.

5. A utensil (1) for cooking food under pressure according to claim 4, **characterized in that** the clearance e is substantially constant over the entire length of the central top bearing face (21).

6. A utensil (1) for cooking food under pressure according to any one of claims 1 to 5, **characterized in that** the height of the gap (22) lies in the range 20% to 70% of H, where the value H is the height of the front face (17) of the jaw (11).

7. A utensil (1) for cooking food under pressure according to any one of claims 1 to 6, **characterized in that** the top bearing face (16) is provided with a radial slot (25) for passing a pin (26) that is permanently fastened to the lid (6) in order to guide the jaw (11) in translation.

8. A utensil (1) for cooking food under pressure according to claim 7, **characterized in that** the radial slot (25) includes an enlarged terminal portion (30) for passing a shoulder (31) surmounting the pin (26) during assembly of the jaw (11) on the lid (6).

9. A method of fabricating a locking jaw (11) with a U-shaped cross-section for a utensil (1) for cooking food under pressure and having a vessel (2) and a lid (6), said method consisting in obtaining the jaw (11) by folding a substantially plane metal part (M) having a configuration and dimensions that are pre-established to correspond to the final configuration and dimensions of the final jaw (11) after folding, said part presenting, in a longitudinal direction (L), a longitudinal dimension that corresponds to the longitudinal dimension of the final jaw (11) and, in a transverse direction (T), an overall transverse dimension that corresponds to the final U-shaped section of the jaw (11),
the method being **characterized in that**:
a metal part (M) is used that has a central gap (22) extending along the longitudinal direction (L) so as to define a central zone (G) in register with the central gap (22), the central zone (G) being of transverse dimension that is smaller than the overall transverse dimension and, on either side of said central gap (22), so as to define two end portions (C, D) of the part (M) of transverse dimension that is equal to the overall transverse dimension; and
performing a first longitudinal folding operation on the part (M) in its longitudinal direction (L) along a fold line (PL1) passing beside said central gap (22) in order to obtain an L-shaped folded part defining a top bearing face (21) of the jaw (11) and a front face (17) of the jaw (11) extending over the entire longitudinal dimension of the jaw (11).

10. A fabrication method according to claim 9, **characterized in that** a second longitudinal folding operation is performed on the part (M) along a fold line (PL2) passing through the two end portions (C, D) and through the central gap (22) so as to fold the two end portions (C, D) and obtain two locking wings (15) of U-shaped section.

11. A fabrication method according to claim 10, **characterized in that** the first and second folding operations (PL1, PL2) are performed one after the other.

12. A fabrication method according to claim 11, **characterized in that** the first folding operation (PL1) is performed before the second folding operation (PL2).
